(19) Europäisches Patentamt / European Patent Office / Office européen des brevets

(11) **EP 2 575 262 A2**

(12) **EUROPEAN PATENT APPLICATION**
published in accordance with Art. 153(4) EPC

(43) Date of publication:
**03.04.2013 Bulletin 2013/14**

(51) Int Cl.:
***H04B 3/32*** *(2006.01)*

(21) Application number: **11744285.5**

(22) Date of filing: **14.04.2011**

(86) International application number:
**PCT/CN2011/072794**

(87) International publication number:
**WO 2011/100927 (25.08.2011 Gazette 2011/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Huawei Technologies Co., Ltd.
Shenzhen, Guangdong 518129 (CN)**

(72) Inventors:
• **WANG, Xiang
Shenzhen
Guangdong 518129 (CN)**

• **LIU, Lihe
Shenzhen
Guangdong 518129 (CN)**
• **LI, Cheng
Shenzhen
Guangdong 518129 (CN)**

(74) Representative: **Maiwald Patentanwalts GmbH
Elisenhof
Elisenstrasse 3
80335 München (DE)**

(54) **METHOD, DEVICE AND SYSTEM FOR GROUPING LINE PAIRS**

(57) Embodiments of the present invention relate to the field of communications and disclose a method and an apparatus for grouping line pairs, and a system, so as to solve a problem that obtaining a crosstalk cancellation coefficient matrix through channel training imposes a very high requirement on a system capability such as a computing capability and a storage capability and even affects user experience due to the relatively large number of line pairs in a large scale Vectored-DSL system. A technical solution provided in the present invention includes: acquiring crosstalk impact data between line pairs in a vectored-digital subscriber line Vectored-DSL system (101); and grouping line pairs, between which a crosstalk impact cannot be ignored, into one vector group according to a set threshold and the crosstalk impact data between the line pairs (102). The method and apparatus provided in the embodiments of the present invention are applicable to a large scale Vectored-DSL.

Acquire crosstalk impact data between line pairs in a vectored-digital subscriber line system — 101

Group line pairs, between which a crosstalk impact cannot be ignored, into one vector group according to a set threshold and the crosstalk impact data between the line pairs — 102

FIG. 1

EP 2 575 262 A2

**Description**

**FIELD OF THE INVENTION**

The present invention relates to the field of communications, and in particular to a method and an apparatus for grouping line pairs, and a system.

**BACKGROUND OF THE INVENTION**

A digital subscriber line (Digital Subscriber Line, DSL) technology is a high-speed transmission technology for transmitting data through a phone twisted-pair cable. The DSL includes an symmetrical digital subscriber line (Asymmetrical Digital Subscriber Line, ADSL), a very high speed digital subscriber line (Very High Speed Digital Subscriber Line, VDSL), a single-pair high speed digital subscriber line (Single-pair High Speed Digital Subscriber Line, SHDSL), and so on.

When a central office end communicates with a client through the ADSL/VDSL, a near-end crosstalk NEXT and a far-end crosstalk FEXT may occur on the line. The frequency of an uplink signal is different from that of a downlink signal on the ADSL/VDSL. In this case, in a same network position, the frequency of a signal transmitted by a transmitter is different from that of a signal received by a receiver, thereby ensuring that the NEXT is relatively small. In another aspect, for the ADSL/VDSL, cancellation of the far-end crosstalk FEXT between lines is implemented using a crosstalk cancellation technology. The implementation is mainly divided into three steps: channel estimation, crosstalk cancellation, and channel tracing and updating, where the channel tracing and updating are implemented by repeating the channel estimation and crosstalk cancellation, so as to adapt to continuously changing line conditions. Specifically, a vectored-digital subscriber line (Vectored-Digital Subscriber Line, Vectored-DSL) system is used to perform crosstalk cancellation. A line access multiplexer may be used at the central office end to perform channel estimation to centrally manage signals on multiple lines and acquire a transmitted signal on an adjacent line and a crosstalk transfer function between adjacent lines; and perform crosstalk cancellation so that a signal about adjacent line information of each line is transmitted on each line in addition to a signal of the line itself, where the signal about adjacent line information of each line is obtained using the crosstalk transfer function. In this way, crosstalk of adjacent lines is canceled at a receiving end, thereby obtaining a signal of a present line through demodulation.

In a large scale Vectored-DSL, the number of line pairs is relatively large, which generally exceeds 300 line pairs. Obtaining a crosstalk cancellation coefficient matrix through channel training imposes a very high requirement on a system capability (such as a computing capability and a storage capability), and even affects user experience. For example, a long time is required from adding a line pair to enabling the line pair. For example, in a Vectored-DSL including 300 line pairs, 60 ms is generally required from adding a line pair to enabling the line pair.

**SUMMARY OF THE INVENTION**

Embodiments of the present invention provide a method and an apparatus for grouping line pairs, which are used to solve a problem that a very high requirement is imposed on a system capability and even user experience is affected due to the relatively large number of line pairs in a large scale Vectored-DSL.

To achieve the preceding objectives, the embodiments of the present invention adopt the following technical solutions:

A method for grouping line pairs includes: acquiring crosstalk impact data between line pairs in a vectored-digital subscriber line Vectored-DSL system; and grouping line pairs, between which a crosstalk impact cannot be ignored, into one vector group according to a set threshold and the crosstalk impact data between the line pairs.

An apparatus for grouping line pairs includes:

an acquiring unit, configured to acquire crosstalk impact data between line pairs in a vectored-digital subscriber line Vectored-DSL system; and
a grouping unit, configured to group line pairs, between which a crosstalk impact cannot be ignored, into one vector group according to a set threshold and the crosstalk impact data that is between the line pairs and is acquired by the acquiring unit.

A digital subscriber line system, includes a line access multiplexer DSLAM, configured to provide multiple digital subscriber lines for accessing a central office end, where the DSLAM includes the preceding apparatus for grouping line pairs.

According to the method and apparatus for grouping line pairs, and system in the embodiments of the present invention, line pairs are grouped according to crosstalk impact data and a threshold to form multiple complete vector groups, so that each vector group logically becomes an independent Vectored-DSL subsystem. The number of line pairs in a vector group is smaller than the number of line pairs in a Vectored-DSL system. Channel tracing is performed independently in each vector group, thereby shortening time for the channel tracing. In addition, crosstalk cancellation is performed in each vector group, thereby reducing loads of computing and storage required for the crosstalk cancellation. In this way, the problem that obtaining a crosstalk cancellation coefficient matrix through channel training imposes a very high requirement on a system capability and even affects user experience due to the relatively large number of line pairs in a large scale Vectored-DSL system is solved.

## BRIEF DESCRIPTION OF THE DRAWINGS

FIG. 1 is a flowchart of a method for grouping line pairs according to an embodiment of the present invention;
FIG. 2 is a flowchart of a method for grouping line pairs according to another embodiment of the present invention;

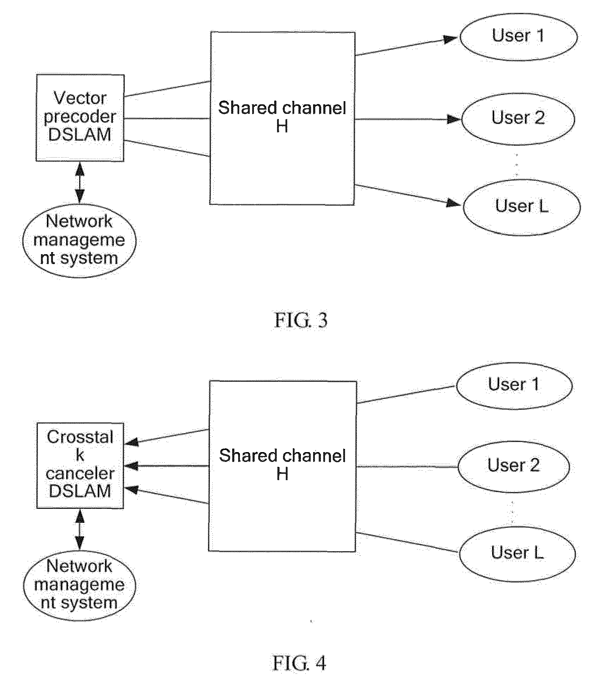

FIG. 3 is an architecture diagram of a system with joint transmission at a DSLAM end and separate reception at a user end;
FIG. 4 is an architecture diagram of a system with separate transmission at a user end and joint reception at a DSLAM end;
FIG. 5 is a first flowchart of step 203 in the method for grouping line pairs shown in FIG. 2;
FIG. 6 is a second flowchart of step 203 in the method for grouping line pairs shown in FIG. 2;
FIG. 7 is a first schematic diagram of groups in step 204 in the method for grouping line pairs shown in FIG. 2;
FIG. 8 is a flowchart of step 204 in the method for grouping line pairs shown in FIG. 7;
FIG. 9 is a second schematic diagram of groups in step 204 in the method for grouping line pairs shown in FIG. 2;
FIG. 10 is a flowchart of step 204 in the method for grouping line pairs shown in FIG. 9;
FIG. 11 is a first schematic structural diagram of an apparatus for grouping line pairs according to an embodiment of the present invention;
FIG. 12 is a schematic structural diagram of an acquiring unit in the apparatus for grouping line pairs shown in FIG. 11;
FIG. 13 is a schematic structural diagram of a grouping unit in the apparatus for grouping line pairs shown in FIG. 11;
FIG. 14 is a second schematic structural diagram of an apparatus for grouping line pairs according to an embodiment of the present invention;
FIG. 15 is a schematic structural diagram of a setting unit in the apparatus for grouping line pairs shown in FIG. 14;
FIG. 16 is a first schematic structural diagram of a setting subunit of the setting unit in the apparatus for grouping line pairs shown in FIG. 15; and
FIG. 17 is a second schematic structural diagram of a setting subunit of the setting unit in the apparatus for grouping line pairs shown in FIG. 15.

## DETAILED DESCRIPTION OF THE EMBODIMENTS

Embodiments of the present invention provide a method and an apparatus for grouping line pairs to solve a problem that obtaining a crosstalk cancellation coefficient matrix through channel training imposes a very high requirement on a system capability and affects user experience due to a relatively large number of line pairs in a large scale Vectored-DSL system.

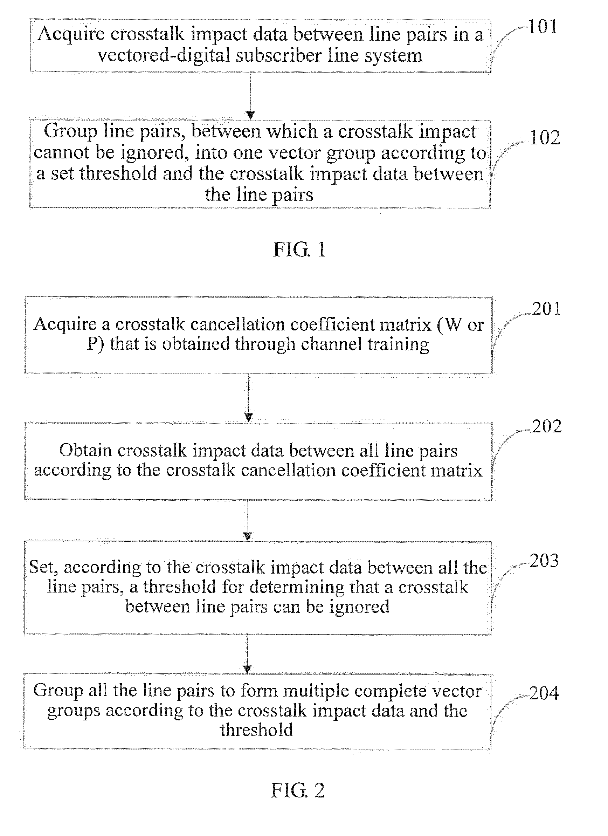

As shown in FIG. 1, an embodiment of the present invention provides a method for grouping line pairs, including:

Step 101: Acquire crosstalk impact data between line pairs in a Vectored-DSL system.

In this embodiment, the crosstalk impact data between the line pairs may be obtained using a crosstalk cancellation coefficient matrix that is obtained through channel training, and may also be obtained using a crosstalk coefficient matrix that is obtained through channel training.

Step 102: Group line pairs, between which a crosstalk impact cannot be ignored, into one vector group according to a set threshold and the crosstalk impact data between the line pairs.

In this embodiment, a crosstalk impact between two line pairs within a complete vector group is significantly larger than a crosstalk impact between two line pairs between complete vector groups.
According to the method for grouping line pairs provided in the embodiment of the present invention, line pairs are grouped according to crosstalk impact data and a threshold to form multiple complete vector groups, so that each vector group logically becomes an independent Vectored-DSL subsystem. The number of line pairs in a vector group is smaller than the number of line pairs in a Vectored-DSL system. Channel tracing is performed independently in each vector group, thereby shortening time for the channel tracing. In addition, crosstalk cancellation is performed in each vector group, thereby reducing loads of computing and storage required for the crosstalk cancellation. In this way, the problem that obtaining a crosstalk cancellation coefficient matrix through channel training imposes a very high requirement on a system capability and even affects user experience due to the relatively large number of line pairs in a large scale Vectored-DSL system is solved.

To enable persons skilled in the art to more clearly understand the technical solution provided in the embodiment of the present invention, the following describes in detail a method for grouping line pairs provided in another embodiment of the present invention, through a specific embodiment.

As shown in FIG. 2, the method for grouping line pairs provided in another embodiment of the present invention is used in a Vectored-DSL system. The Vectored-DSL system includes a digital subscriber line access multiplexer (DSLAM), a crosstalk canceller, and a vector precoder. The DSLAM provides multiple xDSLs for accessing a central office (Central office, CO) end, where xDSL is a generic term of various types of digital subscriber lines. According to a Vectored-DSL technology in the Vectored-DSL system, joint reception and transmission are mainly performed at a DSLAM end and crosstalk is canceled using a signal processing method, where the crosstalk mainly refers to a far-end crosstalk. 3 and 4 show working situations of joint transmission and joint reception at the DSLAM end, respectively.

A shared channel H shown in 3 and 4 can be represented in a form of a matrix on a $k^{th}$ frequency band (tone) in a frequency domain:

$$\mathbf{H} = \begin{bmatrix} h_{11} & h_{12} & \cdots & h_{1M} \\ h_{21} & h_{22} & \cdots & h_{2M} \\ \vdots & \vdots & \ddots & \vdots \\ h_{M1} & h_{M2} & \cdots & h_{MM} \end{bmatrix}_{M \times M} \qquad (Formula\ 1.1)$$

M is the total number of line pairs, $h_{ij}$($1 \leq i \leq M$, $1 \leq j \leq M$) is a value of a transmission function from line pair $j$ to line pair $i$ on the $k^{th}$ frequency band, and **H** is an M*M channel transmission matrix. It is assumed that x is an M*1 channel input vector, y is an M*1 channel output vector, and n is an M*1 noise vector. Finally, a channel transmission equation is expressed in the following form:

$$\mathbf{y} = \mathbf{Hx} + \mathbf{n} \qquad (Formula\ 1.2)$$

For an uplink, joint reception processing on a signal is performed at the CO end, a crosstalk canceller W is introduced at a receiving end, and a received signal is as follows:

$$\tilde{\mathbf{y}} = \mathbf{Wy} = \mathbf{WHx} + \mathbf{Wn} \qquad (Formula\ 1.3)$$

When WH is a diagonal matrix, the crosstalk is canceled.

For a downlink, joint transmission processing of a signal is performed at the CO end, a vector precoder p is introduced at the CO end, and a transmitted signal is as follows:

$$\tilde{\mathbf{x}} = \mathbf{Px} \qquad (Formula\ 1.4)$$

The signal received at the receiving end is as follows:

$$\tilde{\mathbf{y}} = \mathbf{H}\tilde{\mathbf{x}} + \mathbf{n} = \mathbf{HPx} + \mathbf{n} \quad (Formula\, 1.5)$$

When HP is a diagonal matrix, the crosstalk is canceled.

In the Vectored-DSL, joint processing is performed on the uplink and downlink to achieve an effect of canceling the far-end crosstalk. A crosstalk cancellation coefficient matrix (W or P) may be obtained through channel training. Generally, when the channel training is performed, the training is directly performed to obtain the crosstalk cancellation coefficient matrix.

The method for grouping line pairs provided in another embodiment of the present invention includes:

Step 201: Acquire the crosstalk cancellation coefficient matrix (W or P) that is obtained through channel training.
Step 202: Obtain crosstalk impact data between line pairs according to the crosstalk cancellation coefficient matrix.

In the Vectored-DSL system, a transmission matrix (see Formula 1.1) in the frequency domain is a diagonally dominant matrix (in mathematics, the "diagonally dominant matrix" is defined as a matrix in which the absolute value of a diagonal entry is greater than the sum of absolute values of other entries in the same row; here in the Vectored-DSL system, the absolute value of a diagonal entry is significantly greater than the absolute value of another entry in the same row; therefore, the definition of the diagonally dominant matrix is satisfied). A non-diagonal entry of the transmission matrix reflects crosstalk, where its value equals a crosstalk coefficient multiplied by the value of direct channel fading (a diagonal entry in the same row). In the Vectored-DSL system, frequency-domain equalization (FEQ) processing is performed on a received signal. The value of FEQ of the $i^{th}$ line on the $k^{th}$ frequency band approximates to the reciprocal of a direct channel $h_{ii}$. In this case, in the Vectored-DSL system, FEQ processing performed on a signal on a receiving side is equivalent to multiplying a diagonal matrix F (a diagonal entry of F is an FEQ value of a corresponding line) on the $k^{th}$ frequency band. Therefore, when an ideal crosstalk cancellation coefficient matrix (W or P, see Formula 1.3 or Formula 1.5) is obtained through channel training in the Vectored-DSL system, in the downlink, FHP = I (I is a unit matrix), and in the uplink, WFH = I (the FEQ is performed before uplink joint cancellation) or FWH = I (the FEQ is performed after uplink joint cancellation). According to a mathematics theory, it can be deduced that the absolute value of a non-diagonal entry of the crosstalk cancellation coefficient matrix (W (the FEQ is performed before uplink joint cancellation), or P) approximates to the absolute value of the crosstalk coefficient, and for W (the FEQ is performed after uplink joint cancellation), a transformed W' = F$^{-1}$WF may be used, where the absolute value of a non-diagonal entry of W' approximates to the absolute value of a crosstalk channel transmission coefficient. With generality, the following describes a case where the FEQ is performed before uplink joint cancellation, and does not further describe a case where the FEQ is performed after the uplink joint cancellation. Therefore, according to the crosstalk cancellation coefficient matrix, the absolute value of the non-diagonal entry of the crosstalk cancellation coefficient matrix (W or P) is used as the crosstalk impact data between the line pairs.

Preferably, to ensure the accuracy of the crosstalk impact data, step 201 includes: acquiring multiple crosstalk cancellation coefficient matrices or multiple crosstalk coefficient matrices that are obtained through channel training performed on multiple frequency bands. Step 202 includes: obtaining an average crosstalk matrix according to the multiple crosstalk cancellation coefficient matrices or obtaining an average crosstalk coefficient matrix according to the multiple crosstalk coefficient matrices; and obtaining the crosstalk impact data between the line pairs according to the average crosstalk matrix or the average crosstalk coefficient matrix. Impacts of a noise and a quantization error on the crosstalk cancellation coefficient matrix that is obtained through channel training are reduced in a statistical sense.

It should be noted that a crosstalk coefficient matrix may also be obtained through channel training, and the crosstalk impact data between the line pairs is obtained according to the crosstalk coefficient matrix. The specific implementation manner is the same as step 201 and step 202 and is not repeated herein.

Step 203: Set, according to the crosstalk impact data between the line pairs, a threshold $\delta$ for determining whether crosstalk between line pairs can be ignored.

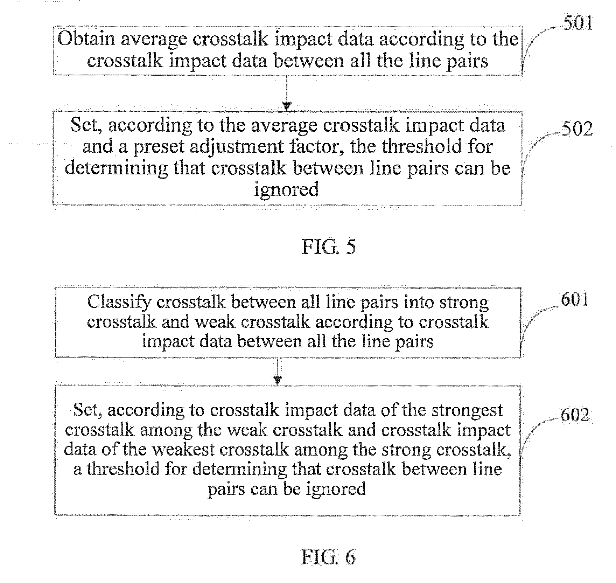

Specifically, as shown in FIG. 5, step 203 includes:

Step 501: Obtain average crosstalk impact data according to the crosstalk impact data between the line pairs.
Step 502: Set, according to the average crosstalk impact data and a preset adjustment factor $\alpha$, the threshold $\delta$ for determining whether crosstalk between line pairs can be ignored, where the adjustment factor $\alpha$ is a positive number. $\delta = \alpha$ * average crosstalk impact data, where $\alpha$ may be set to 1.

Optional, as shown in FIG. 6, step 203 includes:

Step 601: Classify crosstalk between the line pairs into strong crosstalk and weak crosstalk according to the crosstalk impact data between the line pairs.

Step 602: Set, according to crosstalk impact data of the strongest crosstalk among the weak crosstalk and crosstalk impact data of the weakest crosstalk among the strong crosstalk, the threshold for determining whether crosstalk between line pairs can be ignored.

It should be noted that the threshold may also be obtained in a preset manner. In this case, the threshold may be a preset empirical value.

Step 204: Group line pairs, between which a crosstalk impact cannot be ignored, into one vector group according to the set threshold and the crosstalk impact data between the line pairs.

In this embodiment, a crosstalk impact between two line pairs within a complete vector group is significantly larger than a crosstalk impact between two line pairs between complete vector groups.

Step 204 may be as follows: Group the line pairs, between which the crosstalk impact cannot be ignored, into one vector group according to the crosstalk impact data and the threshold in a recursive manner,

Specifically, all line pairs, between which and a grouping reference line pair cross impacts are greater than the threshold $\delta$, are searched for among to-be-grouped line pairs and are used as related line pairs, and the related line pairs are extracted from the to-be-grouped line pairs and are grouped into one group with the grouping reference line pair.

The grouping reference line pair may be randomly selected from ungrouped line pairs or from the related line pairs. The to-be-grouped line pairs are remaining line pairs among the ungrouped line pairs except the grouping reference line pair. At the beginning of grouping of each complete vector group, the grouping reference line pair is randomly selected from the ungrouped line pairs. Before the grouping of each complete vector group is completed, the grouping reference line pair is randomly selected from the related line pairs.

When a crosstalk impact between the grouping reference line pair and any line pair among the to-be-grouped line pairs is smaller than the threshold $\delta$, grouping of one complete vector group is completed.

When no to-be-grouped line pair exists among the line pairs, the line pair grouping is completed, and the line pairs are formed of multiple complete vector groups.

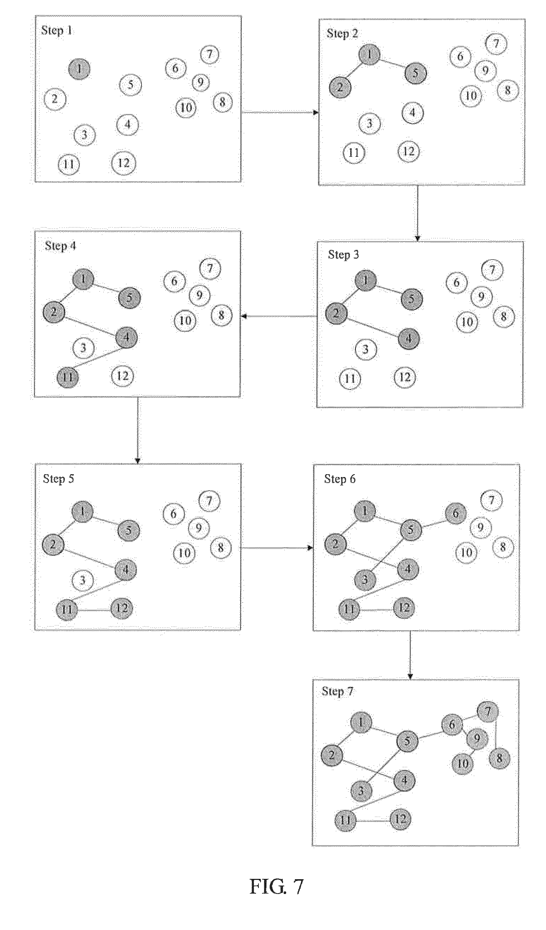

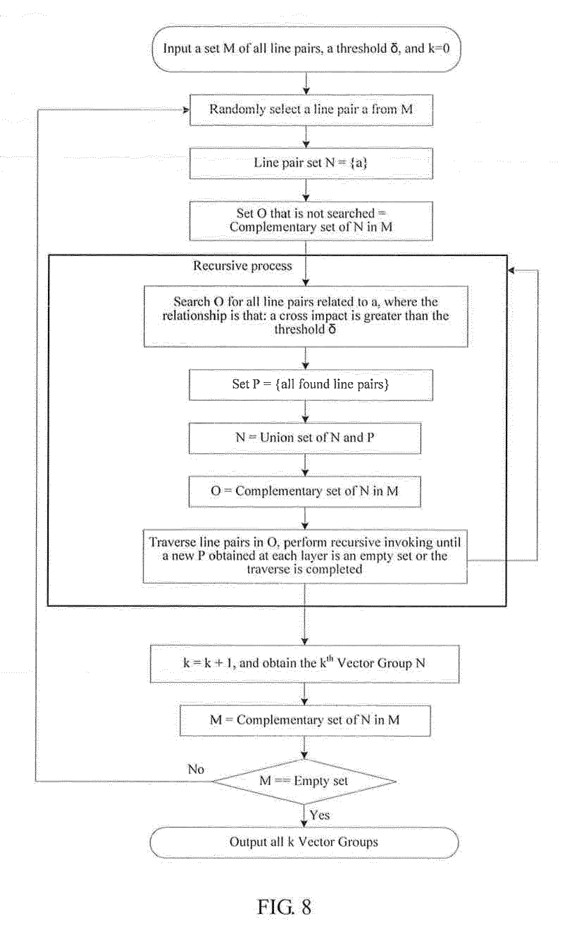

For ease of understanding of persons skilled in the art, as shown in FIG. 7 and FIG. 8, FIG. 7 shows crosstalk impacts between line pairs in a figure layer manner, where a circle is used to indicate a line pair in a current system, the number in the circle represents the serial number of the line pair, and a straight line is used to connect line pairs between which a crosstalk impact is greater than the threshold $\delta$, thereby obtaining a schematic diagram of crosstalk impacts shown in FIG. 7.

At the beginning of the grouping, all line pairs are not grouped. First, an ungrouped set M, a grouped set N, and a to-be-grouped set O are created. At the beginning of the grouping, the ungrouped set M includes all the line pairs. A line pair a is randomly selected from the set M as the grouping reference line pair and as the grouped line pair set N = {a}. The line pair a is randomly selected from the set M, the line pair a = line pair 1 and N = {line pair 1}. Remaining line pairs in the set M except the set N form the to-be-grouped set O. When a line pair, crosstalk impact data between which and the line pair a is greater than the threshold $\delta$ exists in the to-be-group set O, the line pair is extracted from the set O to form a related line pair set P, and the set P is incorporated into the set N. N = {line pair 1}. It is found according to the threshold $\delta$ that line pairs related to line pair 1 are line pair 2 and line pair 5. In this case, the related line pair set P is formed, where P = {line pair 2, line pair 5}, and N = {line pair 1, line pair 2, line pair 5}. It should be noted that the set O is always the complementary set of N in M. Then, a next-layer search is performed. Line pair 2 is selected from the set P. The set O is searched for a line pair between which and line pair 2 a crosstalk impact is greater than $\delta$, and line pair 4 is obtained. Line pair 4 is extracted from the set O and incorporated into the set N. A next-layer search continues to be performed. The set O is searched for a line pair between which and line pair 4 a crosstalk impact is greater than $\delta$, and line pair 11 and line pair 12 are obtained in turn. The search is continued until it is found that no line pair, between which and line pair 12 a crosstalk impact is greater than the threshold $\delta$, exists outside the set O. In this situation, a former search layer is returned to until the layer at which line pair 2 and line pair 5 are found is returned to. Because the line pair related to line pair 2 has been searched for, a next-layer search is performed, that is, searching for a line related to line pair 5. In this case, the obtained set N = {line pair 1, line pair 2, line pair 5, line pair 4, line pair 11, line pair 12}. In this case, a search is performed outside the set for line pair 5 until an empty set is found in a recursive search of each layer or a traverse is completed. The obtained set N is used as a complete vector group, where N = {line pair 1, line pair 2, line pair 3, line pair 4, line pair 5, line pair 6, line pair 7, line pair 8, line pair 9, line pair 10}. The complete vector group is deleted from all the line pairs and a recursive search is performed again for a subsequent complete vector group.

Optionally, step 204 may also be as follows: Group line pairs, between which a crosstalk impact cannot be ignored, into one vector group according to the crosstalk impact data and the threshold in a cyclic manner.

Specifically, among the to-be-grouped line pairs, all line pairs, between which and the grouping reference line pair crosstalk impacts are greater than the threshold $\delta$, are searched for as the related line pairs, and the related line pairs are extracted from the to-be-grouped line pairs and grouped into one group with the grouping reference line pair. Then, all the related line pairs are used as grouping reference line pairs, and among the to-be-grouped line pairs, all line pairs, between which and the reference line pairs for grouping crosstalk impacts are greater than the threshold $\delta$, are searched for as the related line pairs, and the related line pairs are extracted from the to-be-grouped line pairs and grouped into one group with the grouping reference line pairs. The cyclic processing is performed until crosstalk impacts between the grouping reference line pairs and all to-be-grouped line pairs are smaller than the threshold $\delta$. In this way, the grouping of a complete vector group is completed. At the beginning of the grouping, the grouping reference line pair is randomly selected from all the line pairs, and the to-be-grouped line pairs are remaining line pairs among all the line pairs except the grouping reference line pair. When at least one complete vector group is formed, the at least one complete vector group is deleted from all the line pairs, and one grouping reference line pair is randomly selected from the remaining line pairs. The to-be-grouped line pairs are remaining line pairs except the grouping reference line pair and the at least one complete vector group. When no to-be-grouped line pair exists among all the line pairs, all the line pairs are grouped completely, and all the line pairs are formed of multiple complete vector groups.

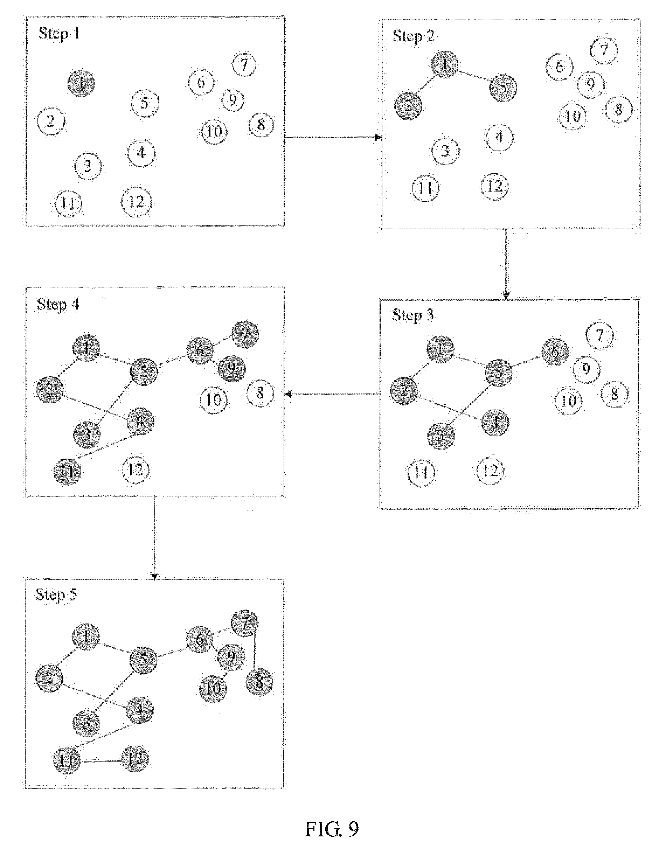

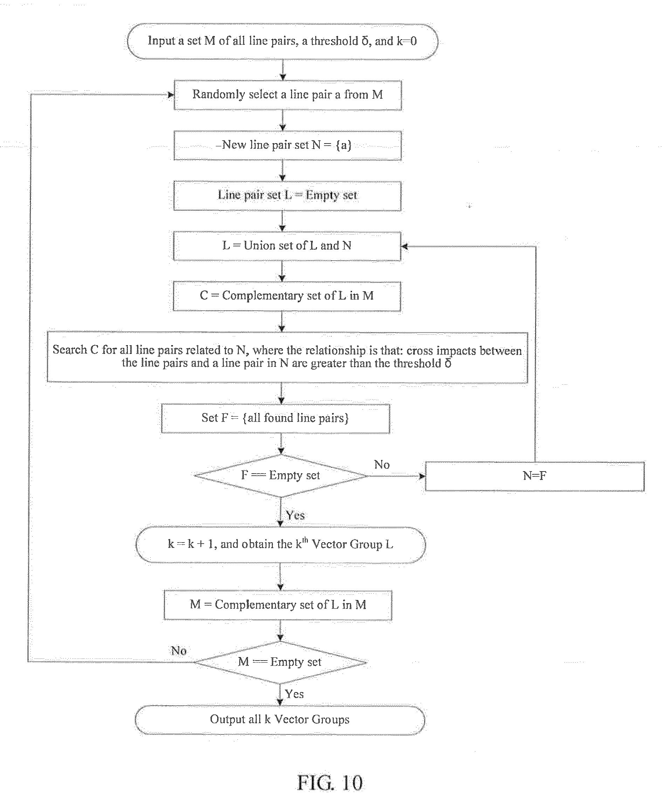

For ease of understanding of persons skilled in the art, as shown in FIG. 9 and FIG. 10, FIG. 9 shows crosstalk impacts between line pairs in a figure layer manner, where a circle is used to indicate a line pair in a current system, the number in the circle represents the serial number of the line pair, and a straight line is used to connect line pairs between which a crosstalk impact is greater than the threshold $\delta$, thereby obtaining a schematic diagram of crosstalk impacts shown in FIG. 9.

Specifically, taking 9 as an example, a grouping reference line pair, namely, line pair 1, is randomly selected from all the line pairs. Starting from line pair 1, after line pairs, between which and line pair 1 crosstalk impacts are greater than $\delta$, are determined to obtain line pair 2 and line pair 5, a set {line pair 1, line pair 2, line pair 5} is formed. Line pair 2 and line pair 5 are used as grouping reference line pairs. Outside the set, lines pairs, between which and line pair 2 and line pair 5 crosstalk impacts are greater than $\delta$, are determined to obtain line pair 3, line pair 4, and line pair 6. Line pair 4 and line pair 6 are incorporated into the existing set to obtain a new set {line pair 1, line pair 2, line pair 3, line pair 5, line pair 6, line pair 4}. Line pair 2 line pair 4, and line pair 6 are used as grouping reference line pairs. Outside the set, line pairs, between which and line pair 3, line pair 4, and line pair 6 crosstalk impacts are greater than $\delta$, continue to be determined. This is repeated until no new line pair, between which and the grouping reference line pair a crosstalk impact is greater than the threshold $\delta$, exists outside the obtained set. In this case, a complete set is obtained. The line pair set is used as a first vector group. Then, the vector group is deleted from all the line pairs and a second vector group is obtained using the preceding method. This is repeated until each line pair is grouped into a certain vector group.

According to the method for grouping line pairs in the embodiment of the present invention, all line pairs are grouped according to crosstalk impact data and a threshold to form multiple complete vector groups, so that each vector group logically becomes an independent Vectored-DSL subsystem. The number of line pairs in a vector group is smaller than the number of line pairs in a Vectored-DSL system. Channel tracing is performed independently in each vector group, thereby shortening time for the channel tracing. In this way, the problem that obtaining a crosstalk cancellation coefficient matrix through channel training imposes a very high requirement on a system capability (such as a computing capability and a storage capability) and even affects user experience due to the relatively large number of line pairs in a large scale Vectored-DSL system is solved.

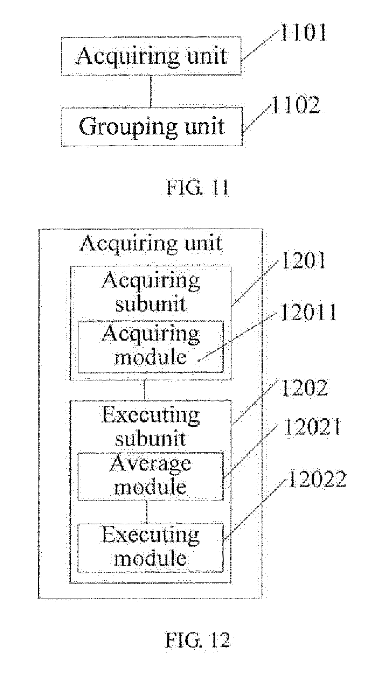

As shown in FIG. 11, an embodiment of the present invention provides an apparatus for grouping line pairs, including:

An acquiring unit 1101 is configured to acquire crosstalk impact data between line pairs in a vectored-digital subscriber line Vectored-DSL system. For a specific implementation method of this unit, reference may be made to step 101 shown in FIG. 1, and therefore details are not repeated herein.

In this embodiment, as shown in FIG. 12, the acquiring unit includes:

An acquiring subunit 1201 is configured to acquire a crosstalk cancellation coefficient matrix or a crosstalk coefficient matrix that is obtained through channel training. For a specific implementation method of this subunit, reference may be made to step 201 shown in FIG. 2, and therefore details are not repeated herein.

Preferentially, to ensure the accuracy of the crosstalk impact data, the acquiring subunit includes:

an acquiring module 12011, configured to acquire multiple crosstalk cancellation coefficient matrices or multiple crosstalk coefficient matrices that are obtained through channel training performed on multiple frequency bands.

For a specific implementation method of this module, reference may be made to step 201 shown in FIG. 2, and therefore details are not repeated herein.

An executing subunit 1202 is configured to obtain the crosstalk impact data between the line pairs according to the crosstalk cancellation coefficient matrix or the crosstalk coefficient matrix acquired by the acquiring subunit. For a specific implementation method of this subunit, reference may be made to step 202 shown in FIG. 2, and therefore details are not repeated herein.

Specifically, the executing subunit includes:

an average module 12021, configured to obtain an average crosstalk matrix according to the multiple crosstalk cancellation coefficient matrices acquired by the acquiring module or obtain an average crosstalk coefficient matrix according to the multiple crosstalk coefficient matrices acquired by the acquiring module, where for a specific implementation method of this module, reference may be made to step 202 shown in FIG. 2, and therefore details are not repeated herein; and

an executing module 12022, configured to obtain the crosstalk impact data between the line pairs according to the average crosstalk matrix or the average crosstalk coefficient matrix obtained by the average module, where for a specific implementation method of this module, reference may be made to step 202 shown in FIG. 2, and therefore details are not repeated herein.

A grouping unit 1102 is configured to group line pairs, between which a crosstalk impact cannot be ignored, into one vector group according to a set threshold and the crosstalk impact data that is between the line pairs and is acquired by the acquiring unit. For a specific implementation method of this unit, reference may be made to step 102 shown in FIG. 1, and therefore details are not repeated herein.

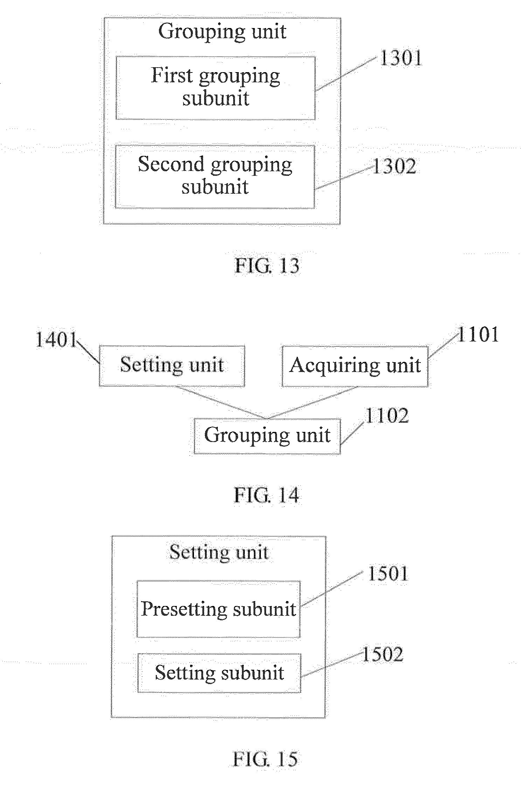

In this embodiment, as shown in FIG. 13, the grouping unit includes:

a first grouping subunit 1301, configured to, in a recursive manner and according to the crosstalk impact data acquired by the acquiring unit and the threshold set by a setting unitgroup the line pairs to form multiple complete vector groups, where for the specific implementation method of this subunit, reference may be made to step 204 shown in FIG. 2, and therefore details are not repeated herein; and/or
a second grouping subunit 1302, configured to, in a cyclic manner and according to the crosstalk impact data acquired by the acquiring unit and the threshold set by a setting unit,group the line pairs to form multiple complete vector groups, where for a specific implementation method of this subunit, reference may be made to step 204 shown in FIG. 2, and therefore details are not repeated herein.

Further, as shown in FIG. 14, the apparatus for grouping line pairs further includes:

a setting unit 1401, configured to set the threshold, where for the specific implementation method of this unit, reference may be made to step 203 shown in FIG. 2, and therefore details are not repeated herein.

In this embodiment, as shown in FIG. 15, the setting unit includes:

a presetting subunit 1501, configured to preset a threshold for determining whether crosstalk between line pairs can be ignored, where for a specific implementation method of this subunit, reference may be made to step 203 shown in FIG. 2, and therefore details are not repeated herein; and/or
a setting subunit 1502, configured to set, according to the crosstalk impact data that is between the line pairs and is acquired by the acquiring unit, a threshold for determining whether crosstalk between line pairs can be ignored, where for a specific implementation method of this subunit, reference may be made to step 203 shown in FIG. 2, and therefore details are not repeated herein.

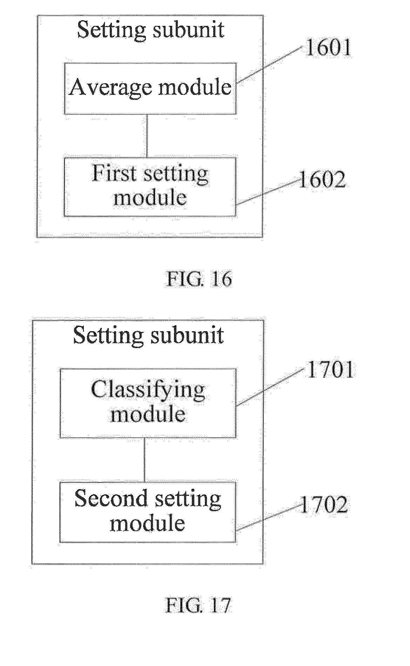

Specifically, as shown in FIG. 16, the setting subunit includes:

an average module 1601, configured to obtain average crosstalk impact data according to the crosstalk impact data that is between the line pairs is acquired by the acquiring unit, where for a specific implementation method of this module, reference may be made to step 501 shown in FIG. 5, and therefore details are not repeated herein; and
a first setting module 1602, configured to set, according to a preset adjustment factor and the average crosstalk impact data that is acquired by the average module, the threshold for determining whether crosstalk between line pairs can be ignored, where the adjustment factor is a positive number, and for a specific implementation method of this module, reference may be made to step 502 shown in FIG. 5, and therefore details are not repeated herein.

Optionally, as shown in FIG. 17, the setting subunit includes:

a classifying module 1701, configured to classify crosstalk between the line pairs into strong crosstalk and weak crosstalk according to the crosstalk impact data that is between the line pairs and is acquired by the acquiring unit, where for a specific implementation method of this module, reference may be made to step 601 shown in FIG. 6, and therefore details are not repeated herein; and
a second setting module 1702, configured to set, according to crosstalk impact data of the strongest crosstalk among the weak crosstalk and crosstalk impact data of the weakest crosstalk among the strong crosstalk, the threshold for determining whether crosstalk between line pairs can be ignored, where for a specific implementation method of this module, reference may be made to step 602 shown in FIG. 6, and therefore details are not repeated herein.

According to the apparatus for grouping line pairs in the embodiment of the present invention, line pairs are grouped according to crosstalk impact data and a threshold to form multiple complete vector groups, so that each vector group logically becomes an independent Vectored-DSL subsystem. The number of line pairs in a vector group is smaller than the number of line pairs in a Vectored-DSL system. Channel tracing is performed independently in each vector group, thereby shortening time for the channel tracing. In this way, the problem that obtaining a crosstalk cancellation coefficient matrix through channel training imposes a very high requirement on a system capability and affects user experience due to the relatively large number of line pairs in a large scale Vectored-DSL system is solved.

A digital subscriber line system provided in an embodiment of the present invention includes a line access multiplexer DSLAM, configured to provide multiple digital subscriber lines for accessing a central office end. The DSLAM includes the apparatus for grouping line pairs shown in any one of FIG. 11 to FIG. 17. The specific structure and implementation manner of the apparatus for grouping line pairs are the same as the preceding embodiments, and therefore details are not repeated herein.

According to the digital subscriber line system in the embodiment of the present invention, line pairs are grouped according to crosstalk impact data and a threshold to form multiple complete vector groups, so that each vector group logically becomes an independent Vectored-DSL subsystem. The number of line pairs in a vector group is smaller than the number of line pairs in a Vectored-DSL system. Channel tracing is performed independently in each vector group, thereby shortening time for the channel tracing. In this way, the problem that obtaining a crosstalk cancellation coefficient matrix through channel training imposes a very high requirement on a system capability and affects user experience due to the relatively large number of line pairs in a large scale Vectored-DSL system is solved.

The method and apparatus for grouping line pairs, and system that are provided in the embodiments of the present invention are applicable to a large scale Vectored-DSL.

Persons of ordinary skill in the art may understand that all or part of the steps of the foregoing methods in the embodiments may be implemented by a program instructing relevant hardware. The program may be stored in a computer readable storage medium, such as a ROM/RAM, a magnetic disk, or an optical disk.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for grouping line pairs, comprising:

   acquiring crosstalk impact data between line pairs in a vectored-digital subscriber line Vectored-DSL system; and
   grouping line pairs, between which a crosstalk impact cannot be ignored, into one vector group according to a set threshold and the crosstalk impact data between the line pairs.

2. The method according to claim 1, wherein the acquiring crosstalk impact data between line pairs in a vectored-digital subscriber line Vectored-DSL system comprises:

   acquiring a crosstalk cancellation coefficient matrix or a crosstalk coefficient matrix that is obtained through channel training; and
   obtaining the crosstalk impact data between the line pairs according to the crosstalk cancellation coefficient matrix or the crosstalk coefficient matrix.

3. The method according to claim 2, wherein the acquiring a crosstalk cancellation coefficient matrix or a crosstalk coefficient matrix that is obtained through channel training comprises:

acquiring multiple crosstalk cancellation coefficient matrices or multiple crosstalk coefficient matrices that are obtained through channel training performed on multiple frequency bands; and
the obtaining the crosstalk impact data between the line pairs according to the crosstalk cancellation coefficient matrix or the crosstalk coefficient matrix comprises:

obtaining an average crosstalk matrix according to the multiple crosstalk cancellation coefficient matrices or obtaining an average crosstalk coefficient matrix according to the multiple crosstalk coefficient matrices; and
obtaining the crosstalk impact data between the line pairs according to the average crosstalk matrix or the average crosstalk coefficient matrix.

4. The method according to any one of claims 1-3, wherein the method for setting the threshold comprises:

presetting a threshold for determining whether crosstalk between line pairs can be ignored; or
setting, according to the crosstalk impact data between the line pairs, a threshold for determining whether crosstalk between line pairs can be ignored.

5. The method according to claim 4, wherein the setting, according to the crosstalk impact data between the line pairs, a threshold for determining whether crosstalk between line pairs can be ignored comprises:

obtaining average crosstalk impact data according to the crosstalk impact data between the line pairs; and
setting, according to the average crosstalk impact data and a preset adjustment factor, the threshold for determining whether crosstalk between line pairs can be ignored, wherein the adjustment factor is a positive number.

6. The method according to claim 4, wherein the setting, according to the crosstalk impact data between the line pairs, a threshold for determining whether crosstalk between line pairs can be ignored comprises:

classifying crosstalk between the line pairs into strong crosstalk and weak crosstalk according to the crosstalk impact data between the line pairs; and
setting, according to crosstalk impact data of the strongest crosstalk among the weak crosstalk and crosstalk impact data of the weakest crosstalk among the strong crosstalk, the threshold for determining whether crosstalk between line pairs can be ignored.

7. The method according to any one of claims 1 to 3, wherein the grouping line pairs, between which a crosstalk impact cannot be ignored, into one vector group according to a set threshold and the crosstalk impact data between the line pairs comprises:

grouping the line pairs, between which the crosstalk impact cannot be ignored, into one vector group according to the crosstalk impact data and the threshold in a recursive manner; or
grouping the line pairs, between which the crosstalk impact cannot be ignored, into one vector group according to the crosstalk impact data and the threshold in a cyclic manner.

8. An apparatus for grouping line pairs, comprising:

an acquiring unit, configured to acquire crosstalk impact data between line pairs in a vectored-digital subscriber line Vectored-DSL system; and
a grouping unit, configured to group line pairs, between which a crosstalk impact cannot be ignored, into one vector group according to a set threshold and the crosstalk impact data that is between the line pairs and is acquired by the acquiring unit.

9. The apparatus according to claim 8, wherein the acquiring unit comprises:

an acquiring subunit, configured to acquire a crosstalk cancellation coefficient matrix or a crosstalk coefficient matrix that is obtained through channel training; and

an executing subunit, configured to obtain the crosstalk impact data between the line pairs according to the crosstalk cancellation coefficient matrix or the crosstalk coefficient matrix acquired by the acquiring subunit.

10. The apparatus according to claim 9, wherein:

the acquiring subunit comprises:

an acquiring module, configured to acquire multiple crosstalk cancellation coefficient matrices or multiple crosstalk coefficient matrices that are obtained through channel training performed on multiple frequency bands; and
the executing subunit comprises:

an average module, configured to obtain an average crosstalk matrix according to the multiple crosstalk cancellation coefficient matrices acquired by the acquiring module or obtain an average crosstalk coefficient matrix according to the multiple crosstalk coefficient matrices acquired by the acquiring module; and
an executing module, configured to obtain the crosstalk impact data between the line pairs according to the average crosstalk matrix or the average crosstalk coefficient matrix obtained by the average module.

11. The apparatus according to any one of claims 8 to 10, further comprising a setting unit, configured to set the threshold, wherein
the setting unit comprises:

a presetting subunit, configured to preset a threshold for determining whether crosstalk between line pairs can be ignored; and/or
a setting subunit, configured to set, according to the crosstalk impact data that is between the line pairs and is acquired by the acquiring unit, a threshold for determining whether crosstalk between line pairs can be ignored.

12. The apparatus according to claim 11, wherein the setting subunit comprises:

an average module, configured to obtain average crosstalk impact data according to the crosstalk impact data that is between the line pairs and is acquired by the acquiring unit; and
a first setting module, configured to set, according to a preset adjustment factor and the average crosstalk impact data that is acquired by the average module, the threshold for determining whether crosstalk between line pairs can be ignored, wherein the adjustment factor is a positive number.

13. The apparatus according to claim 11, wherein the setting subunit comprises:

a classifying module, configured to classify crosstalk between the line pairs into strong crosstalk and weak crosstalk according to the crosstalk impact data that is between the line pairs and is acquired by the acquiring unit; and
a second setting module, configured to set, according to crosstalk impact data of the strongest crosstalk among the weak crosstalk and crosstalk impact data of the weakest crosstalk among the strong crosstalk, the threshold for determining whether crosstalk between line pairs can be ignored.

14. The apparatus according to any one of claim 8 to 10, wherein the grouping unit comprises:

a first grouping subunit, configured to group the line pairs, between which the crosstalk impact cannot be ignored, into one vector group in a recursive manner and according to the crosstalk impact data acquired by the acquiring unit and the threshold; and
a second grouping subunit, configured to group the line pairs, between which the crosstalk impacts cannot be ignored, into one vector group in a cyclic manner and according to the crosstalk impact data acquired by the acquiring unit and the threshold.

15. A digital subscriber line system, comprising a line access multiplexer DSLAM, configured to provide multiple digital subscriber lines for accessing a central office end, wherein the ISLAM comprise the apparatus for grouping line pairs according to any one of claims 8 to 14.

Acquire crosstalk impact data between line pairs in a vectored-digital subscriber line system    ⌒101

Group line pairs, between which a crosstalk impact cannot be ignored, into one vector group according to a set threshold and the crosstalk impact data between the line pairs    ⌒102

FIG. 1

Acquire a crosstalk cancellation coefficient matrix (W or P) that is obtained through channel training    ⌒201

Obtain crosstalk impact data between all line pairs according to the crosstalk cancellation coefficient matrix    ⌒202

Set, according to the crosstalk impact data between all the line pairs, a threshold for determining that a crosstalk between line pairs can be ignored    ⌒203

Group all the line pairs to form multiple complete vector groups according to the crosstalk impact data and the threshold    ⌒204

FIG. 2

FIG. 3

FIG. 4

Obtain average crosstalk impact data according to the crosstalk impact data between all the line pairs ⌐501

Set, according to the average crosstalk impact data and a preset adjustment factor, the threshold for determining that crosstalk between line pairs can be ignored ⌐502

FIG. 5

Classify crosstalk between all line pairs into strong crosstalk and weak crosstalk according to crosstalk impact data between all the line pairs ⌐601

Set, according to crosstalk impact data of the strongest crosstalk among the weak crosstalk and crosstalk impact data of the weakest crosstalk among the strong crosstalk, a threshold for determining that crosstalk between line pairs can be ignored ⌐602

FIG. 6

FIG. 7

```
┌─────────────────────────────────────────────────────────┐
│  Input a set M of all line pairs, a threshold δ, and k=0  │
└─────────────────────────────────────────────────────────┘
                            │
                            ▼
        ┌─────────────────────────────────────────┐
    ┌──►│   Randomly select a line pair a from M   │
    │   └─────────────────────────────────────────┘
    │                       │
    │                       ▼
    │         ┌─────────────────────────────┐
    │         │      Line pair set N = {a}   │
    │         └─────────────────────────────┘
    │                       │
    │                       ▼
    │      ┌──────────────────────────────────────┐
    │      │  Set O that is not searched =         │
    │      │  Complementary set of N in M          │
    │      └──────────────────────────────────────┘
    │                       │
```

Recursive process

Search O for all line pairs related to a, where the relationship is that: a cross impact is greater than the threshold δ

Set P = {all found line pairs}

N = Union set of N and P

O = Complementary set of N in M

Traverse line pairs in O, perform recursive invoking until a new P obtained at each layer is an empty set or the traverse is completed

$k = k + 1$, and obtain the $k^{th}$ Vector Group N

M = Complementary set of N in M

No ── M == Empty set

Yes

Output all k Vector Groups

FIG. 8

FIG. 9

Input a set M of all line pairs, a threshold δ, and k=0

Randomly select a line pair a from M

New line pair set N = {a}

Line pair set L = Empty set

L = Union set of L and N

C = Complementary set of L in M

Search C for all line pairs related to N, where the relationship is that: cross impacts between the line pairs and a line pair in N are greater than the threshold δ

Set F = {all found line pairs}

F == Empty set

No → N=F

Yes

k = k + 1, and obtain the $k^{th}$ Vector Group L

M = Complementary set of L in M

M == Empty set

No

Yes

Output all k Vector Groups

FIG. 10

Acquiring unit — 1101

Grouping unit — 1102

FIG. 11

Acquiring unit

Acquiring subunit — 1201

Acquiring module — 12011

Executing subunit — 1202

Average module — 12021

Executing module — 12022

FIG. 12

Grouping unit

First grouping
subunit — 1301

Second grouping
subunit — 1302

FIG. 13

1401 — Setting unit          Acquiring unit — 1101

Grouping unit — 1102

FIG. 14

Setting unit

Presetting subunit — 1501

Setting subunit — 1502

FIG. 15

Setting subunit

Average module — 1601

First setting
module — 1602

FIG. 16

Setting subunit

Classifying
module — 1701

Second setting
module — 1702

FIG. 17